# EUROPÄISCHE PATENTSCHRIFT

(11) **EP 0 850 632 B1**
(45) Veröffentlichungstag und Bekanntmachung des Hinweises auf die Patenterteilung: **28.05.2003**
(21) Anmeldenummer: 97122796.2
(22) Anmeldetag: 23.12.1997
(51) Int. Cl.: A61G 15/14

(54) **Arztlicher oder zahnärztlicher Behandlungsplatz mit einem Behandlungsstuhl**
Place for medical or dental treatment with treatment chair
Lieu de traitement médical ou dentaire avec fauteuil de traitement

(30) Priorität: 27.12.1996 DE 29622496 U; 23.09.1997 DE 29717025 U
(43) Veröffentlichungstag der Anmeldung: 01.07.1998
(73) Patentinhaber: Kaltenbach & Voigt GmbH & Co. KG, 88400 Biberach/Riss (DE)
(72) Erfinder: Grimm, Michael, 89597 Munderkingen (DE); Baur, Helmut, 88454 Unteressendorf (DE); Braetsch, Hartmut, 88433 Assmannshardt (DE); Baumann, Linus, 88416 Bellamont (DE)
(74) Vertreter: Schmidt-Evers, Jürgen, Dipl.-Ing.

(56) Entgegenhaltungen:
- DE-A- 1 805 515
- FR-A- 2 539 891

## Beschreibung

Die Erfindung bezieht sich auf einen ärztlichen oder zahnärztlichen Behandlungsplatz nach dem Oberbegriff des Anspruchs 1. Ein solcher Behandlungsplatz ist in der Praxis allgemein bekannt und z. B. in den DE 1 805 515 A und DE 28 23 858 A1 beschrieben.

Bei den meisten an einem Behandlungsplatz durchzuführenden Behandlungsarten sind während der Behandlung von der Behandlungsstelle Körperflüssigkeiten und/oder Behandlungsflüssigkeiten abzusaugen, was durch die Benutzung eines sogenannten Absaughandstücks erfolgt Bei einem zahnärztlichen Behandlungsplatz dient hierzu ein sogenannter Speichelsauger, mit dem aus dem Mund des Patienten Speichel und gegebenenfalls Behandlungsflüssigkeit abgesaugt werden.

Bei vielen Behandlungsarten, bei denen die Behandlungsstelle abzusaugen ist, besteht oft die Notwendigkeit, eine Absaugpause einzulegen. Dies ist z.B. dann erforderlich, wenn der behandelnde Arzt Sondierungsmaßnahmen durchführt, in denen er beispielsweise akkustisch und taktil agiert, und bei denen das kaum zu vermeidende Absauggeräusch stört.

Bei dem bekannten Behandlungsstuhl, bei dem es sich um eine moderne Bauart handelt, erfolgt die Einschaltung eines Sauggerätes, an das das oder die Absaughandstücke mittels jeweils einer flexiblen Absaugleitung angeschlossen sind durch einem primären schalter, automatisch bei der Entnahme des jeweiligen Absaughandstücks aus der zugehörigen Haltevorrichtung. Ein wahlweises Ausschalten des Sauggerätes ist nur verhältnismäßig schwierig und ergonomisch ungünstig durchführbar, nämlich dadurch, den in die jeweilige Haltevorrichtung integrierten primären Schalter manuell zu betätigen und dadurch das Sauggerät abzuschalten. Dieser Nachteil zeigt sich insbesondere dann, wenn eine Arzhelferin an der Behandlungsstelle andere Hilfstätigkeiten auszuführen hat, oder der Arzt selbst keine Hand frei hat, um den im Bereich der Haltevorrichtung und somit ergonomisch ungünstig angeordneten primären Schalter zum Ausschalten und auch wieder Einschalten des Sauggerätes zu betätigen.

Der Erfindung liegt die Aufgabe zugrunde, bei einem ärztlichen oder zahnärztlichen Behandlungsplatz der eingangs angegebene Art die Bedienbarkeit zu verbessern.

Diese Aufgabe wird durch die Merkmale des Anspruchs 1 gelöst.

Beim erfindungsgemäßen Behandlungsplatz ist ein vom Stand- bzw. Arbeitsplatz des Arztes und/oder der Helferin ergonomisch günstig erreichbarer sekundärer Schalter zum Ausschalten und vorzugsweise auch wieder Einschalten der Saugwirkung des Sauggerätes am Behandlungsstuhl und/oder im Bein- oder Fußbereich vorgesehen, der wahlweise betätigbar ist. Hierdurch kann die Wirksamkeit des Sauggeräts handhabungsfreundlicher ausgeschaltet oder aus- und gegebenenfalls auch eingeschaltet werden. Ein weiterer Vorteil der erfindungsgemäßen Ausgestaltung besteht darin, daß die Wirksamkeit des Sauggerätes unabhängig von der Stellung oder einer Bewegung des Saughandstücks ein- und ausgeschaltet werden kann. Es ist z.B. möglich, die Wirksamkeit des Saughandstücks wahlweise ein- und auszuschalten, wenn es sich an der Behandlungsstelle im Einsatz befindet, z.B. im Mundraum des Patienten.

Dieser sekundäre Schalter ist vorzugsweise so angeordnet, daß wahlweise der Arzt und oder die Helferin ihn in der Arbeitsstellung erreichen können. Hierdurch ist die erfindungsgemäße Funktion sowohl dann durchführbar, wenn eine Helferin vorhanden ist, als auch dann, wenn der Zahnarzt ohne Helferin arbeitet.

Ein bevorzugter Anordnungsbereich für den Schalter ist der Beinbereich des Behandlungsstuhls bzw. des Arztes und/oder der Helferin. Eine solche Anordnung ermöglicht eine Betätigung des Schalters mit einem Knie oder einem Fuß, wobei eine Hand nicht gebraucht wird und diese gleichzeitig andere Tätigkeiten ausführen kann.

Es trägt im weiteren zu einer wesentlichen Vereinfachung der Bauweise bei, wenn ein bereits vorhandener Schalter anderer Funktion durch Doppelbelegung dazu ausgenutzt wird, die erfindungsgemäße Schaltfunktion für die Wirksamkeit des Sauggerätes zu erfüllen.

In den Unteransprüchen sind Merkmale enthalten, die eine ergonomisch günstige Bedienung des Behandlungsstuhls ermöglichen, zu einfachen und kostengünstig herstellbaren Bauweisen führen und die Funktion des Behandlungsstuhls verbessern.

Nachfolgend werden die Erfindung und weitere durch sie erzielbare Vorteile anhand von bevorzugten Ausgestaltungen und Zeichnungen näher erläutert. Es zeigt
- Figur 1: einen erfindungsgemäßen zahnärztlichen Behandlungsplatz in perspektivischer Darstellung;
- Figur 2: eine Absaugeinrichtung des Behandlungsstuhls in schematischer Darstellung;
- Figur 3: eine Absaugeinrichtung des Behandlungsstuhls in abgewandelter Ausgestaltung;
- Figur 4: ein Ablaufdiagramm der erfindungsgemäßen Abschaltung der Wirksamkeit des Sauggerätes des Behandlungsstuhls;
- Figur 5: ein Steuerdiagramm der erfindungsgemäßen Abschaltung der Saugvorrichtung;
- Figur 6: einen erfindungsgemäßen zahnärztlichen Behandlungsstuhl gemäß Figur 1 in abgewandelter Ausgestaltung.

Die Hauptteile des Behandlungsplatzes 1 sind ein Behandlungsstuhl 2 mit einer einstellbaren Rückenlehne 3 und einer Kopfstütze 4, einer ersten Aufnahmeeinrichtung 5, die an einem Tragarm 6 des Behandlungsstuhls 2 vorzugsweise horizontal bewegbar gehalten ist und mehrere Haltevorrichtungen 7 für Behandlungsinstrumente 8 aufweist, und eine zweite Aufnahmeeinrichtung 9, die an einem Tragarm 11 des Behandlungsstuhls 2 vorzugsweise ebenfalls horizontal bewegbar gehalten ist und mehrere Haltevorrichtungen 14 für mehrere Behandlungsinstrumente aufweist.

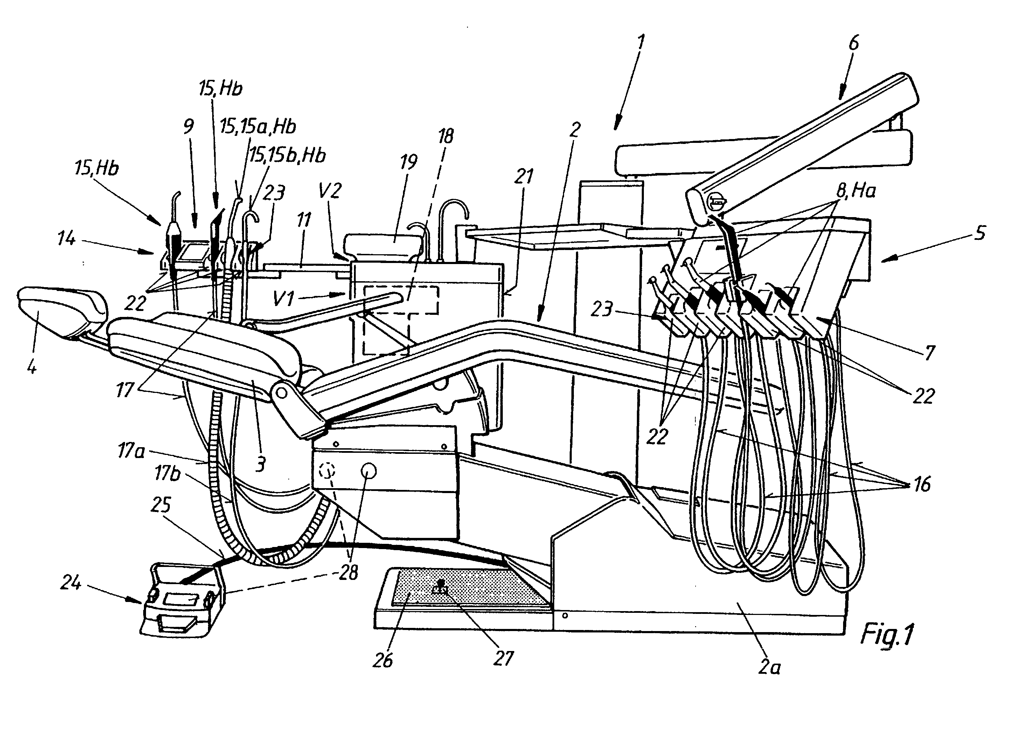

Die in Figur 1 rechts vom Behandlungsstuhl angeordnete Aufnahmeeinrichtung 5 weist mehrere Haltevorrichtungen 7 für zugehörige Behandlungsinstrumente 8 auf. Auch die vom Behandlungsstuhl 2 links angeordnete Aufnahmeeinrichtung 9 weist mehrere Haltevorrichtungen 14 für zugehörige Behandlungsinstrumente 15 auf. Die Behandlungsinstrumente 8, 15 bzw. Handstücke Ha, Hb sind - so weit erforderlich - jeweils durch eine flexible Versorgungsleitung 16, 17 mit einer Versorgungseinrichtung verbunden, die das Behandlungsinstrument 8, 15 je nach seiner Art mit Antriebsenergie und/oder zugehörigen Medien, wie elektrischer Strom, Licht, Wasser, Luft und dergleichen versorgt. Bei den mit 15a, 15b bezeichneten Behandlungsinstrumenten handelt es sich um sogenannte Saughandstücke, deren Versorgungsleitung 17a, 17b jeweils durch eine Saugleitung gebildet ist, die sich zu einem gemeinsamen Sauggerät 18 erstreckt, das z.B. in einem eine sogenannte Speischale 19 tragenden Ständer 21 angeordnet sein kann, wie es in Fig. 1 andeutungsweise dargestellt ist, oder auch separat oder beim Vorhandensein mehrerer Behandlungsstühle zentral angeordnet sein kann

Die erste Aufnahmeeinrichtung 5 ist dem behandelnden Arzt zugeordnet, während die zweite Aufnahmeeinrichtung 9 einer Helferin zugeordnet ist, deren Arbeitsplatz bezüglich dem Arbeitsplatz des Arztes auf der anderen Seite des Behandlungsstuhls 2 oder an dessen Kopfende angeordnet ist. Von den für den Arzt bestimmten Behandlungsinstrumenten 8 kann ebenfalls wenigstens eins durch ein Absaughandstück gebildet sein.

Die Haltevorrichtungen 7, 14 sind jeweils durch einen etwa vertikalen Aufnahmeschlitz 22 in der zugehörigen Aufnahmeeinrichtung 5, 9 gebildet, der seitlich offen ist, so daß ein rückseitiger verjüngter Abschnitt des zugehörigen Behandlungsinstruments 8, 15 bzw. Handstücks oder die Versorgungsleitung 16, 17 seitlich einsteckbar ist, wobei das Handstück mit einer kopfförmigen Verdickung auf dem oberen Rand des Aufnahmeschlitzes 22 aufliegt.

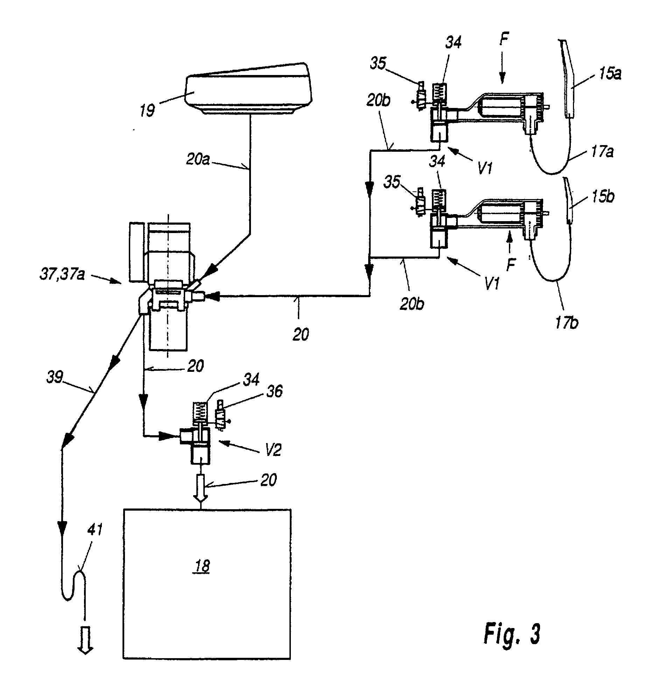

Den Haltevorrichtungen 7, 14 kann jeweils ein z.B. durch eine Lichtschranke gebildeter primärer Schalter 23 zugeordnet sein, der beim Ablegen und Entnehmen des zugehörigen Handstücks ein Signal gibt, das zum Ein- und Ausschalten beim Entnehmen und Ablegen des jeweiligen Handstücks dienen kann. Bei der vorliegenden Ausgestaltung weisen die Haltevorrichtungen der Saughandstücke 15a, 15b jeweils einen solchen Schalter 23 auf, der durch eine Signalleitung mit der vorhandenen, nur in der Figur 3 dargestellten Steuereinrichtung S verbunden ist und die Wirksamkeit des Sauggerätes 18 beim Entnehmen einschaltet und beim Ablegen ausschaltet.

Der Behandlungsstuhl 2 ist höhenverstellbar gelagert und durch einen nicht dargestellten Antrieb höhenverstellbar. Es ist ein Fußschalter 24 vorhanden, der durch eine flexible elektrische Leitung 25 mit dem Behandlungsstuhl und der elektrischen Steuereinrichtung verbunden ist. Aufgrund der Flexibilität der Leitung 25 kann der Fußschalter 24 dem Arbeitsplatz des Arztes und/oder dem Arbeitsplatz der Helferin zugeordnet werden.

Um zu verhindern, daß beim Herunterfahren des von einer Stuhlbasis 2a nach hinten ragenden, in seiner Höhe verstellbaren Behandlungsstuhls 2 ein zwischen letzterem und dem Boden befindlicher Gegenstand Beschädigungen am Behandlungsstuhl 2 hervorrufen könnte, ist dem Behandlungsstuhl 2 eine Sicherheitsvorrichtung zugeordnet mit einer unter dem Behandlungsstuhl 2 nahe über oder auf dem Boden angeordneten Trittplatte 26, die nach unten biegsam oder nachgiebig gelagert ist und bei einer Belastung von oben einen darunter angeordneten, andeutungsweise dargestellten Schalter 27 betätigt, der durch eine Signalleitung ebenfalls mit der Steuereinrichtung verbunden ist und bei einer Bewegung der Trittplatte 26 nach unten den Antrieb für die vertikale Verstellung des Behandlungsstuhls 2 ausschaltet. Hierdurch werden Quetschgefahren unter dem Bahandlungsstuhl vermieden. Die Trittplatte 26 befindet sich unter der Sitzfläche des Behandlungsstuhls 2, wobei über ihr ein Freiraum des vorragenden Behandlungsstuhls 2 vorhanden ist. Beim Einschalten der Höhenverstellung des Behandlungsstuhls 2 werden vorsorglich alle Handstückfunktionen automatisch ausgeschaltet und umgekehrt wird vorzugsweise beim Einschalten einer Handstückfunktion die Höhenverstellung gesperrt.

Im Rahmen der Erfindung ist es möglich, einen Fußschalter oder eine Trittplatte 26 mit einem Schalter 27 mit oder ohne einer vorbeschriebenen Sicherheitseinrichtung als sekundären Schalter 27 zum Einund Ausschalten der Saugwirkung des Sauggerätes 18 zu benutzen.

Bei der vorliegenden Ausgestaltung werden die Trittplatte 26 und eine Doppelbelegung des Schalters 27 dazu ausgenutzt, die Saugwirkung des Sauggerätes 18 wahlweise ein- und auszuschalten. Hierzu bedarf es eines Signals, das den jeweiligen Vorrang der Doppelbelegung steuert. Dazu kann jeweils der zugehörige Schalter 23 ausgenutzt werden, der bei einer Entnahme des zugehörigen Handstücks 15a, 15b geschaltet wird.

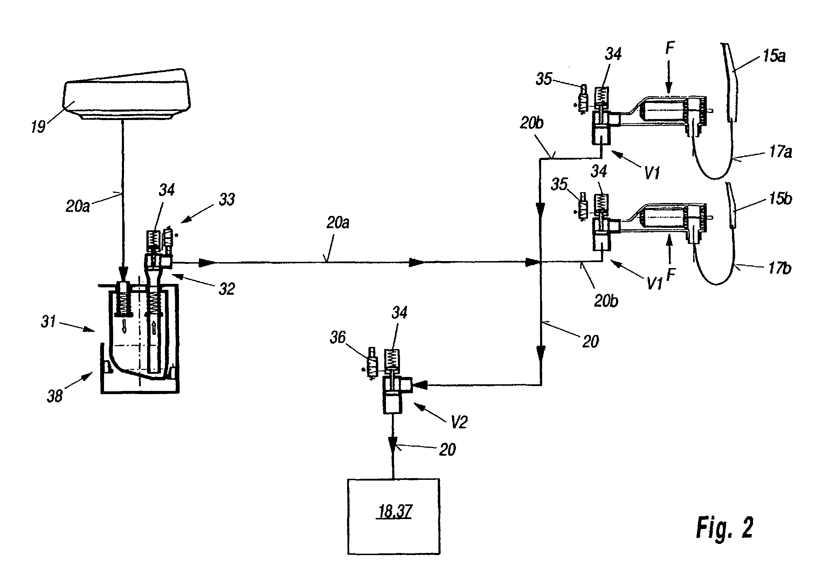

Beim Ausführungsbeispiel nach Fig 2, bei dem gleiche oder vergleichbare Teile mit gleichen Bezugszeichen versehen sind, ist in einem von der Speischale 19 abführenden Saugleitungsabschnitt 20a ein Sammelbehälter 31 für das Abwasser mit einem in Strömungsrichtung nachgeordneten Ventil, ein sogenanntes Schalenventil 32, vorgesehen, das elektrisch oder elektrisch/pneumatisch durch ein Wegeventil 33 zu öffnen und zu schließen ist und vorzugsweise durch die Kraft einer Feder 34 in seine Schließstellung beaufschlagt ist. Die flexiblen Saugleitungen 17a,17b der Saughandstücke sind in Parallelschaltung jeweils durch einen Saugleitungsabschnitt 20b mit einer gemeisamen Saugleitung 20 verbunden, mit der auch der Saugleitungsabschnitt 20a verbunden ist. In den Saugleitungsabschnitten 20b ist jeweils ein Ventil, ein sogenanntes Selektionsventil V1, angeordnet, dem vorzugsweise in Strömungsrichtung ein Filter F vorgeordnet ist. In der sich zum Sauggerät 18 erstreckenden Saugleitung 20 ist ein Ventil, ein sogenanntes Saugstromventil V2, zum Öffnen und Schließen der Saugleitung 20 angeordnet. 'Wie bereits das Ventil 32 sind auch die Ventile V1, V2 elektrisch oder elektrisch/pneumatisch durch ein zugehöriges Wegeventil 35, 36 zu öffnen und zu schließen und vorzugsweise durch die Kraft einer Feder 34 in die Schließstellung beaufschlagt. In das Sauggerät 18 ist ein Amalgamabscheider 37 integriert, der Amalgam separiert , wobei die Saugabluft und Abwasser das Sauggerät 18 getrennt verlassen. Hierbei handelt es sich um eine sogenannte Naßsystem-Absaugung.

Dem Sammelbehälter 31 ist ein Niveaumesser 38 für minimales und maximales Niveau zugeordnet, auf dessen Signale hin die Steuervorrrichtung S das Ventil 32 zwecks Entleerung steuert.

Das Ausführungsbeispiel nach Fig 3, bei dem gleiche oder vergleichbare Teile mit gleichen Bezugszeichen versehen sind, unterscheidet sich vom vorbeschriebenen Ausführungsbeispiel dadurch, daß der Amalgamabscheider 37 als Separier-Amalgamabscheiderkombination 37a dem Ventil V2 in der Strömungsrichtung vorgeordnet ist, wobei die Speischale 19 mit der Amalgamabscheiderkombination 37a verbunden ist und von der Kombination 37a eine Abführungsleitung 39 sich über ein Siphon 41 zum Abwassemetz erstreckt. Hierbei handelt es sich um eine Trockensystem-Absaugung.

Bei allen Ausführungsbeispielen ist es möglich, das Sauggerät 18 und die Abscheiderkombination 37a dem Behandlungsstuhl 2 z. B. im Gestell 21 zuzuordnen oder beim Vorhandensein mehrerer Behandlungsstuhl-Einheiten ein zentrales Sauggerät 18 mit einer Abscheiderkombination 37a vorzusehen.

Die Wirksamkeit des Sauggerätes 18 kann jeweils durch ein Öffnen und Schließen des dem betreffenden Saughandstück zugeordneten Ventils V1 oder V2 oder durch ein Ein- oder Abschalten des Sauggerätes 18 ein- oder abgeschaltet werden. Entsprechend ist die Steuervorrichtung S eingerichtet. Sie kann so ausgebildet sein, daß bei einer Betätigung des Schalters 27 die Wirksamkeit des Sauggerätes 18 abgeschaltet bleibt bis der Schalter 27 losgelassen wird. Es ist auch möglich, die Doppelbelegung des Schalters 27 ist so steuern, daß bei einer Betätigung des Schalters 27 bzw. der Trittplatte 26 das Sauggerät 18 ausgeschaltet wird. Es ist weiter von Vorteil, die zugehörige elektrische Schaltung als Wechselschaltung oder den zugehörigen Schalter 27 als Wechselschalter so auszubilden, daß bei einer zweiten oder weiteren Betätigung der Trittplatte 26 bzw. des Schalters 27 die Saugvorrichtung 18 wieder abgeschaltet wird bzw. dann wieder eingeschaltet wird und somit wechselseitig aus- und einschaltbar ist.

Es ist auch möglich, anstelle oder zusätzlich zum Schalter 27 einen Schalter 28 im Beinbereich des Arbeitsplatzes für den Arzt und/oder des Arbeitsplatzes für die Helferin anzuordnen, der bei seiner Betätigung die Wirksamkeit der Saugvorrichtung 18 ein- oder abschaltet oder abschaltet, wenn diese vorher eingeschaltet worden ist. Auch bei dieser Ausgestaltung ist der Schalter 28 bzw. die elektrische Steuerung vorzugsweise so ausgebildet, daß bei einer nochmaligen Betätigung des Schalters nach seiner Abschaltung die Saugvorrichtung 18 wieder eingeschaltet wird.

Im Rahmen der Erfindung ist es möglich und ebenfalls vorteilhaft, den Schalter 28 z.B. in Kniehöhe auf der einen oder anderen Seite oder auf beiden Seiten am Behandlungsstuhl 2 anzuordnen, so daß er durch eine Kniebewegung betätigbar ist. Es ist auch möglich, den Schalter 28 am vorhanden Fußschalter 24 oder an einem zusätzlichen Fußschalter anzuordnen, der fest angeordnet oder durch eine flexible elektrische Leitung mit dem Behandlungsstuhl verbunden sein kann und somit verstellt werden kann.

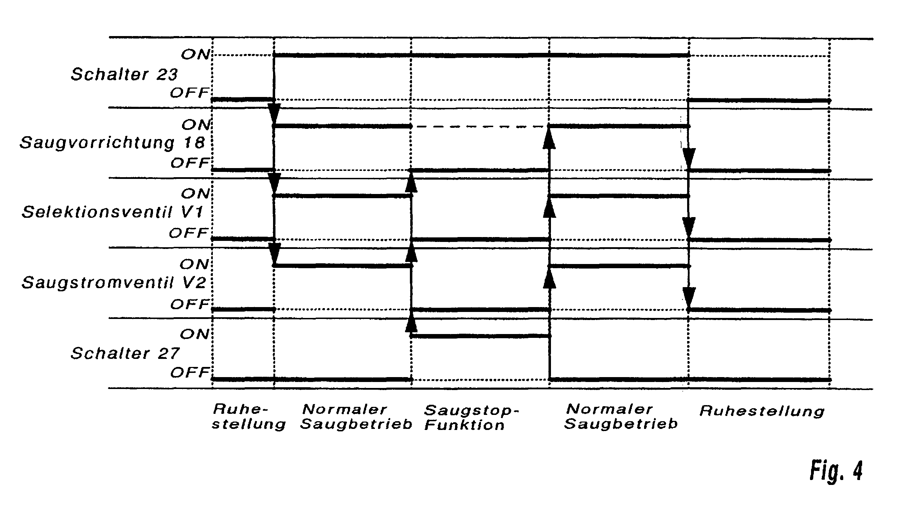

Aus Figur 4 sind die Funktionen der links untereinander angeordneten Teile der vorhandenen Absauganlage zu entnehmen. Es ist die Wechselwirkung des Sauggerätes 18 bei mehrmaliger Betätigung des zweiten Schalters 27 erkennbar. In der Saugstop-Funktion, die durch eine Fußbetätigung der Trittplatte 26 und des Schalters 27 geschaltet wird (Schalter 27 ON) befinden sich das das Saugstromventil V2 in seiner OFF-Stellung, das Selektionsventil V1 in seiner OFF-Stellung und der Schalter 23 in seiner ON-Stellung (Saughandstück 15a oder 15b entnommen). Je nach den Möglichkeiten der vorbeschriebenen Einschaltung der Wirksamkeit des Sauggerätes 18 können das Sauggerät 18 und die Ventile V1, V2 sich während des Saugstopps sowohl in der ON-Stellung als auch in der Off-Stellung befinden.

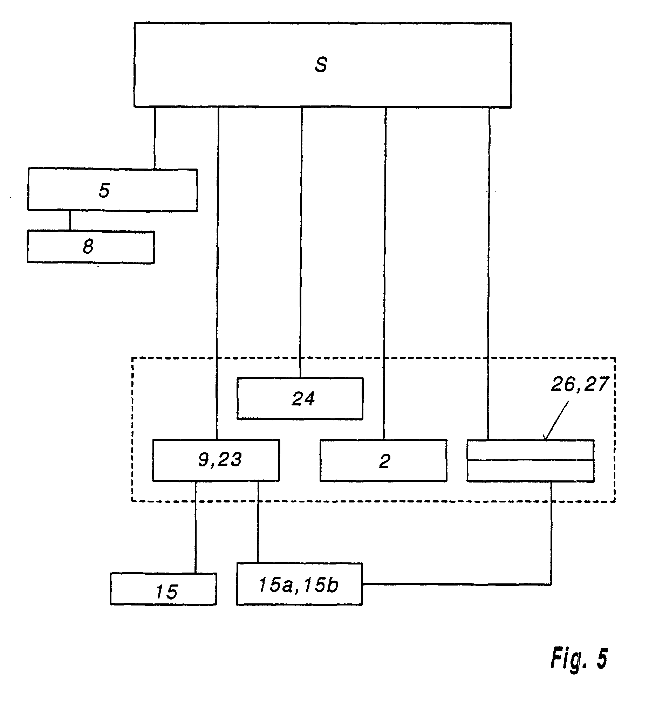

Im Blockschaltbild nach Figur 5, in dem gleiche Teile mit gleichen Bezugszeichen versehen sind, sind die von den Funktionen der Doppelbelegung des Schalters 27 beeinflußten Teile des Behandlungsplatzes 1 durch eine gestrichelte Einrahmung als Funktionseinheit dargestellt.

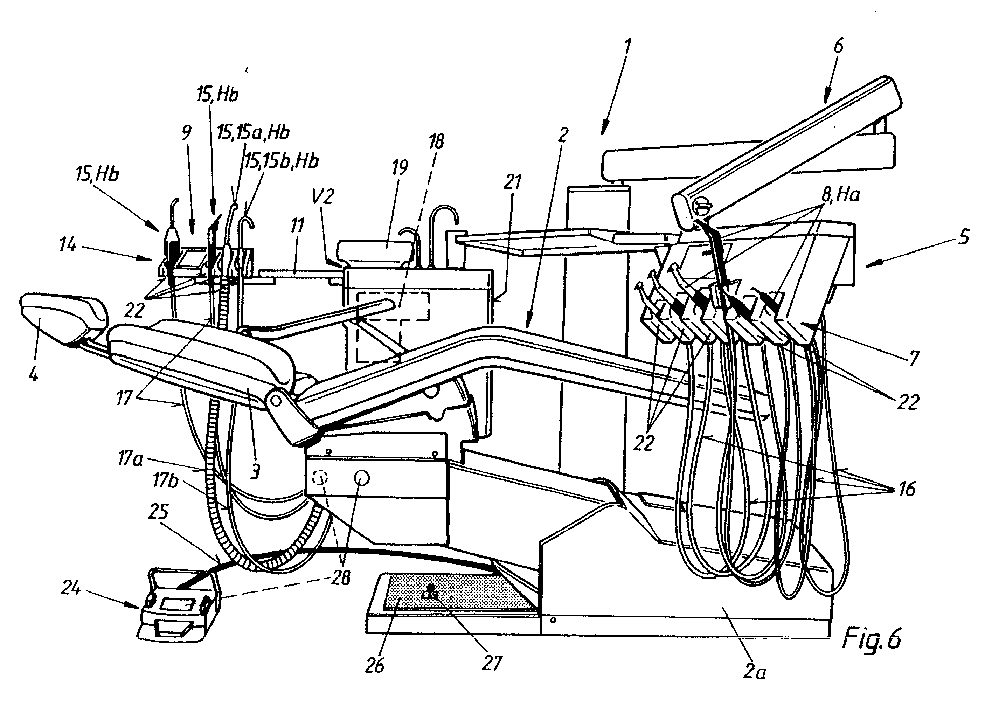

Das Ausführungsbeispiel nach Figur 6, bei dem gleiche oder vergleichbare Teile mit gleichen Bezugszeichen versehen sind, unterscheidet sich vom vorbeschriebenen Ausführungsbeispiel dadurch, daß die Schalter 23 für die Saughandstücke 15a, 15b und die Ventile V1 entfallen. Bei dieser Alternative ist die Wirksamkeit des Sauggerätes 18 folglich durch eine Betätigung des Schalters 27 bzw. der Trittplatte 26 oder des Schalters 28 ein- und ausschaltbar z.B. wechselweise wiederholbar, wie es beim ersten Ausführungsbeispiel gemäß Figur 1 beschrieben worden ist.

Diese alternative Ausgestaltung eignet sich für einen Behandlungsplatz mit nur einem Saughandstück oder auch mehreren Saughandstücken 15a, 15b. Wenn mehrere Saughandstücke 15a, 15b vorhanden sind, sind diese immer gleichzeitig an den Saugstrom angeschlossen, da die Ventile V1 und diese steuernde Schaltsignale fehlen. Da die Saughandstücke 15a, 15b jeweils nur einen Einsaugluftstrom erzeugen, ist es nicht als störend anzusehen, wenn das oder die sich in der Aufnahmeeinrichtung 9 befindlichen Saughandstücke ebenfalls Luft saugen, obwohl sie nicht benutzt werden.

Es ist im Rahmen der Erfindung möglich, bei den Ausgestaltungen nach Fig. 1 bis 3 jedem Saughandstück 15a, 15b im handhabungsfreundlich erreichbaren Bereich am Arbeitsplatz des Arztes und/oder der Helferin, z.B. am Behandlungsstuhl 2 oder direkt an den Saughandstücken, einen zusätzlichen Schalter (nicht dargestellt) anzuordnen, bei dessen Betätigung das zugehörige Ventil V1 geöffnet wird, so daß nur das zugehörige Saughandstück an den Saugstrom angeschlossen wird, während das oder die anderen Saughandstücke durch das oder die zugehörigen Ventile V1 abgeschaltet bleiben.

Im übrigen sind die Ausgestaltung und Funktion des Ausführungsbeispieles nach Figur 6 dem nach Figur 1 entsprechend.

## Patentansprüche

1. Ärztlicher oder zahnärztlicher Behandlungsplatz (1) mit
- einem Behandlungsstuhl (2)
- einem oder mehreren Handstücken (8, 15),
- das bzw. die bei Nichtgebrauch jeweils in einer Haltevorrichtung (7, 14) ablegbar ist bzw. sind,
- und von denen ein oder mehre Handstücke (8, 15) jeweils durch ein Saughandstück (15a, 15b) gebildet ist bzw. sind,
- das durch eine flexible Saugleitung (17a, 17b) mit einem Sauggerät (18) verbunden ist, **dadurch gekennzeichnet, daß**
- ein primärer Schalter (23) zum automatischen Ein- und Ausschalten der Wirksamkeit des Sauggerätes (18) beim Abnehmen und Ablegen des Saughandstücks (15a, 15b) vorgesehen ist und
ein sekundärer Schalter (27;28) zum Aus- und Einschalten der Wirksamkeit des Sauggerätes (18) vorgesehen ist,
- der in einer vom Arbeitsplatz des Arztes und/oder einer Helferin zugänglichen Position am Behandlungsstuhl (2) und/oder im Bein- oder Fußbereich des Arztes und/oder der Helferin angeordnet ist.

2. Ärztlicher oder zahnärztlicher Behandlungsplatz nach Anspruch 1,
**dadurch gekennzeichnet,**
**daß** der sekundäre Schalter (27) ein Fußschalter ist oder mit einer horizontalen Trittplatte (26) zusammenwirkt oder ein Beinschalter (28) ist.

3. Ärztlicher oder zahnärztlicher Behandlungsplatz nach Anspruch 2,
**dadurch gekennzeichnet,**
**daß** die Trittplatte (26) auf dem vorhandenen Boden oder auf einem kleinen Sockel des Behandlungsstuhls (2) angeordnet ist.

4. Ärztlicher oder zahnärztlicher Behandlungsplatz nach Anspruch 2 oder 3,
**dadurch gekennzeichnet,**
**daß** die Trittplatte (26) sich über oder nahezu über die gesamte Breite des Behandlungsstuhls (2) erstreckt.

5. Ärztlicher oder zahnärztlicher Behandlungsplatz nach einem der vorherigen Ansprüche,
**dadurch gekennzeichnet,**
**daß** bei mehrmaligen nacheinander folgenden Betätigungen des im Sinne eines Wechselschalters ausgebildeten sekundären Schalters (27) die Saugvorrichtung (18) wechselweise aus- und eingeschaltet wird. .

6. Ärztlicher oder zahnärztlicher Behandlungsplatz nach einem der vorherigen Ansprüche,
**dadurch gekennzeichnet,**
**daß** der sekundäre Schalter (27) durch einen vorhandenen Schalter mit doppelter funktioneller Belegung gebildet ist.

7. Ärztlicher oder zahnärztlicher Behandlungsplatz nach Anspruch 6,
**dadurch gekennzeichnet,**
**daß** der primäre Schalter (23) den Vorrang der doppelten Belegung des sekundären Schalters (27) derart steuert, daß nach einer Betätigung des primären Schalters (23) die Ein- oder Ausschaltung der Sauggerät (18) Vorrang vor der anderen Belegung hat.

8. Ärztlicher oder zahnärztlicher Behandlungsplatz nach einem der vorherigen Ansprüche,
**dadurch gekennzeichnet,**
**daß** der primäre Schalter (23) an der Haltevorrichtung (7, 14) angeordnet ist und bei einer Entnahme und Ablage des zugehörigen Saughandstücks (15a, 15b) von diesem betätigt wird.

9. Ärztlicher oder zahnärztlicher Behandlungsplatz nach einem der vorherigen Ansprüche,
**dadurch gekennzeichnet,**
**daß** der sekundäre Schalter (27) und/oder die Trittplatte (26) unter einem seitlichen Vorsprung des Behandlungsstuhls (2) angeordnet ist bzw. sind und Teile eines Sicherheitsschaltkreises zum Ausschalten der aufrechten Verstellbewegung des Behandlungsstuhles (2) sind.

10. Ärztlicher oder zahnärztlicher Behandlungsstuhl nach einem der vorherigen Ansprüche,
**dadurch gekennzeichnet,**
**daß** jeweils in einem mit dem wenigstens einen Saughandstück (15a, 15b) verbundenen Saugleitungsabschnitt (17a, 17b) und/oder in einer gemeinsamen Saugleitung (20) ein Ventil (V1,V2) angeordnet ist, das wahlweise motorisch zu öffnen oder zu schließen ist.

11. Ärztlicher oder zahnärztlicher Behandlungsplatz nach einem der vorherigen Ansprüche,
**dadurch gekennzeichnet,**
**daß** ein Amalgamabscheider in das Sauggerät (18) integriert ist oder in einer zum Sauggerät (18) führenden Saugleitung (20) angeordnet ist, vorzugsweise in Strömungsrichtung vor einem Ventil (V2).

## Claims

1. Medical or dental-medical treatment station (1) having
- a treatment chair (2)
- one or more handpieces (8, 15),
- which in the case of non-use can each be deposited in a holder device (7, 14),
- and of which one or more handpieces (8, 15) is or are each constituted by a suction handpiece (15a, 15b),
- which is connected with a suction apparatus (18) by means of a flexible suction line (17a, 17b), and
**characterised in that**,
- there is provided a primary switch (23) for the automatic switching on and switching off of the effectiveness of the suction apparatus (18) upon the removal and the deposition of the suction handpiece (15a, 15b) and
- a secondary switch (27; 28) is provided for the switching off and switching on of the effectiveness of the suction apparatus (18),
- which is arranged in a position on the treatment chair (2) which is accessible from the work location of the doctor and/or an assistant, and/or is arranged in the leg or foot region of the doctor and/or of the assistant.

2. Medical or dental-medical treatment station according to claim 1,
**characterised in that**,
the secondary switch (27) is a foot switch or cooperates with a horizontal stepping plate (26) or is a leg switch (28).

3. Medical or dental-medical treatment station according to claim 2,
**characterised in that**,
the stepping plate (26) is arranged on the floor present or on a small base of the treatment chair (2).

4. Medical or dental-medical treatment station according to claim 2 or 3,
**characterised in that**,
the stepping plate (26) extends over, or practically over, the entire width of the treatment chair (2).

5. Medical or dental-medical treatment station according to any preceding claim,
**characterised in that**,
upon multiple actuations, following after one another, of the secondary switch (27) which is constituted in the manner of a change-over switch, the suction device (18) is alternatingly switched off and switched on.

6. Medical or dental-medical treatment station according to any preceding claim,
**characterised in that**,
the secondary switch (27) is constituted by means of a switch which is present and having double functional assignment.

7. Medical or dental-medical treatment station according to claim 6,
**characterised in that**,
the primary switch (23) so controls the priority of the double assignment of the secondary switch (27) that after an actuation of the primary switch (23) the switching on or switching off of the suction apparatus (18) has priority over the other assignment.

8. Medical or dental-medical treatment station according to any preceding claim,
**characterised in that**,
the primary switch (23) is arranged on the holder device (7, 14) and upon a removal and deposit of the associated suction handpiece (15a, 15b) is actuated by this.

9. Medical or dental-medical treatment station according to any preceding claim,
**characterised in that**,
the secondary switch (27) and/or the stepping plate (26) is or are arranged below a lateral projection of the treatment chair (2), and are parts of a security circuit for the switching off of the upright adjustment movement of the treatment chair (2).

10. Medical or dental-medical treatment chair according to any preceding claim,
**characterised in that**,
there is arranged in each case in a suction line section (17a, 17b) connected with at least one suction handpiece (15a, 15b) and/or in a common suction line (20), a valve (V1, V2) that can be selectively opened or closed by means of a motor.

11. Medical or dental-medical treatment station according to any preceding claim,
**characterised in that**,
an amalgam separator is integrated in the suction apparatus (18) or is arranged in a suction line (20) leading to the suction apparatus (18), preferably before a valve (V2) in the direction of flow.

## Revendications

1. Poste de traitement médical ou dentaire (1) comportant:
- un fauteuil de soins (2)
- un ou plusieurs instruments à main (8,15),
- lequel ou lesquels, en cas de non utilisation, peut ou peuvent être respectivement déposé(s) dans un dispositif de support (7,14),
- et dont un ou plusieurs instruments à main (8,15) est ou sont respectivement constitué(s) par un instrument à main aspirant (15a, 15b),
- qui est raccordé par une conduite d'aspiration flexible (17a,17b) à un appareil d'aspiration (18),
**caractérisé en ce que,**
il est prévu un commutateur primaire (23) pour le branchement et le débranchement automatiques du fonctionnement de l'appareil d'aspiration (18) lors de la prise et de la dépose de l'instrument à main aspirant (15a, 15b) et
Il est prévu un commutateur secondaire (27;28) pour le débranchement et le branchement du fonctionnement de l'appareil d'aspiration (18),
- qui est disposé dans une position accessible au poste de travail du médecin et/ou d'une assistante au niveau du fauteuil de soins (2) et/ou dans la région des jambes ou des pieds du médecin et/ou de l'assistante.

2. Poste de traitement médical ou dentaire selon la revendication 1,
**Caractérisé en ce que,**
le commutateur secondaire (27) est un commutateur à pied ou coopère avec une pédale horizontale (26) ou un commutateur à jambe (28).

3. Poste de traitement médical ou dentaire selon la revendication 2,
**Caractérisé en ce que,**
la pédale (26) est agencée sur le sol existant ou sur un petit socle du fauteuil de soins (2).

4. Poste de traitement médical ou dentaire selon la revendication 2 ou 3,
**Caractérisé en ce que,**
la pédale (26) s'étend sur toute ou quasiment sur toute la largeur du fauteuil de soins (2).

5. Poste de traitement médical ou dentaire selon l'une des revendications précédentes,
**Caractérisé en ce que,**
lors d'actionnements consécutifs répétés du commutateur secondaire (27) conçu en qualité d'inverseur va-et-vient, le dispositif d'aspiration (18) est alternativement débranché et branché.

6. Poste de traitement médical ou dentaire selon l'une des revendications précédentes,
**Caractérisé en ce que,**
le commutateur secondaire (27) est constitué par un commutateur existant ayant une double position fonctionnelle.

7. Poste de traitement médical ou dentaire selon la revendication 6,
**Caractérisé en ce que,**
le commutateur primaire (23) commande la priorité de la double position fonctionnelle du commutateur secondaire (27) de telle sorte qu'après un actionnement du commutateur primaire (23) le branchement ou débranchement de l'appareil d'aspiration (18) a la priorité vis-à-vis de l'autre position.

8. Poste de traitement médical ou dentaire selon l'une des revendications précédentes,
**Caractérisé en ce que,**
le commutateur primaire (23) est disposé sur le dispositif de support (7, 14) et lors d'une prise ou dépose de l'instrument à main aspirant concerné (15a, 15b) est actionné par celui-ci.

9. Poste de traitement médical ou dentaire selon l'une des revendications précédentes,
**Caractérisé en ce que,**
le commutateur secondaire (27) et/ou la pédale (26) est ou sont agencé(s) sous une protubérance latérale du fauteuil de soins (2) et font partie d'un circuit de commutation de sécurité pour la mise hors service du mouvement de réglage de redressement du fauteuil de soins (2).

10. Fauteuil de soins médicaux ou dentaires selon l'une des revendications précédentes,
**Caractérisé en ce que,**
une soupape (V1, V2) est disposée respectivement dans une section de conduite d'aspiration (17a, 17b) raccordée à au moins un instrument à main aspirant (15a,15b) et/ou dans une conduite d'aspiration commune (20), soupape qui peut être ouverte ou fermée sélectivement au moyen d'un moteur.

11. Poste de traitement médical ou dentaire selon l'une des revendications précédentes,
**Caractérisé en ce que,**
un séparateur d'amalgame est intégré dans le dispositif d'aspiration ou dans une conduite d'aspiration (20) menant à l'appareil d'aspiration (18), de préférence dans la direction d'écoulement en amont d'une soupape (V2).
